# EUROPÄISCHE PATENTSCHRIFT

(11) **EP 2 706 331 B1**
(45) Veröffentlichungstag und Bekanntmachung des Hinweises auf die Patenterteilung: **06.09.2017**
(21) Anmeldenummer: 13175130.7
(22) Anmeldetag: 04.07.2013
(51) Int. Cl.: G01J 5/04, G01J 5/00, G01J 5/02, G01J 5/06, G01J 5/08, G02B 7/02

(54) **Temperaturmessgerät, insbesondere handgehaltenes Infrarotmessgerät**
Temperature measuring apparatus, in particular hand-held infrared measurement device
Appareil de mesure de la température, notamment appareil de mesure infrarouge manuel

(30) Priorität: 05.09.2012 DE 102012215691
(43) Veröffentlichungstag der Anmeldung: 12.03.2014
(73) Patentinhaber: ROBERT BOSCH GMBH, 70442 Stuttgart (DE)
(72) Erfinder: Frank, Michael, 75015 Bretten (DE); Uhlig, Mike, 70178 Stuttgart (DE); Meyer, Patrick, 70771 Leinfelden-Echterdingen (DE); Babkina, Tatiana, 72072 Tuebingen (DE)

(56) Entgegenhaltungen:
- JP-A- 2003 295 024
- US-A- 1 417 326
- US-A- 3 017 513
- US-A- 4 190 325
- US-A- 5 323 005
- US-A1- 2006 198 424
- US-A1- 2011 096 314
- US-B1- 6 292 311
- US-B1- 6 650 412
- US-B1- 6 787 775

## Beschreibung

Die Erfindung betrifft ein Messgerät zur berührungslosen Temperaturmessung, insbesondere ein handgehaltenes Infrarotmessgerät.

### Stand der Technik

Berührungslose Temperaturmessgeräte sind seit längerer Zeit bekannt. Eine Klasse dieser Geräte wird gebildet durch die sogenannten Infrarottemperaturmessgeräte. Derartige Messgeräte, auch Strahlungsthermometer oder Pyrometer genannt, detektieren die von einem Objekt emittierte Wärmestrahlung, deren Intensität und Lage des Emissionsmaximums von seiner Temperatur abhängt. Durch eine Messung dieser Größen kann auf die Temperatur des emittierenden Objektes geschlossen werden.

Bekannt sind Pyrometer die mittels einer IR-Linse und einem Thermopile als Detektor Infrarotstrahlung von Objekten messen und somit deren Oberflächentemperatur bestimmen können. Aus der DE 20 2005 015 397 U1 ist ein derartiges handgehaltenes Strahlungsthermometer bekannt. Eine Schwierigkeit solcher Messsysteme liegt darin, dass die Komponenten des Messgerätes wiederum temperaturanfällig sind und beispielsweise einen unterschiedlichen Wärmeausdehnungskoeffizienten aufweisen.

Die Schrift US 6,787,778 B1 offenbart eine tragbare Wärmebildkamera, die eine stoßabsorbierende Linsenbefestigung aufweist, die die Übertragung von Krafteinwirkungen auf die Linse minimiert.

Ähnlich wird in US 3,017,513 ein Infrarot-Feuerdetektionsapparat vorgestellt, der einen Parabolspiegel aufweist, der mittels eines stoßabsorbierenden Materials, beispielsweise Gummi oder Plastik, getragen wird.

Der Erfindung liegt die Aufgabe zugrunde, ein Messgerät zur berührungslosen Temperaturmessung zur Verfügung zu stellen, welches Fehlmessungen weitgehend vermeidet und eine möglichst genaue Messung gewährleisten kann.

### Offenbarung der Erfindung

Die Erfindung löst das zugrundeliegende Problem mittels eines Messgerätes nach Anspruch 1.

Das erfindungsgemäße Messgerät weist einen im Gerätegehäuse angeordneten Infrarotsensor zur berührungslosen Temperaturmessung auf. Die von einem zu vermessenden Objekt, wie beispielsweise einer Wand, einer Decke, einem Fenster oder einem anderen Untersuchungsgegenständen entsprechend seiner Temperatur abgestrahlte Infrarotstrahlung wird über ein optisches Element im Messgerät gebündelt und auf einen Sensor des Messgerätes, insbesondere einen Infrarotsensor gelenkt. Der Infrarotsensor des Gerätes, beispielsweise ein Thermopile-Detektor misst die Infrarotstrahlung, die von einer Auswerteeinheit des Gerätes einem Temperaturwert zugeordnet. Erfindungsgemäß ist das optische Element dabei schwimmend gelagert, um möglichen Verspannungen aufgrund unterschiedlichen Temperaturverhaltens der Komponenten des Messsystems des Messgerätes entgegen zu wirken.

Unter einer schwimmenden Lagerung soll hierbei die Bewegbarkeit des Elementes, im vorliegenden Beispiel die Bewegbarkeit des optischen Elementes, in zumindest einer Richtung bzw. einer Ebene verstanden werden. So kann das optische Element beispielsweise in axialer Richtung angedrückt werden, um eine definierte axiale Position, die beispielsweise einer Brennweite einer Linse entspricht, einzunehmen, in radialer Richtung aber kraftfrei gelagert sein. Auch ist es möglich, alternativ oder zusätzlich, auf das optische Element in axialer Richtung auch nur mittelbar eine Kraft anzuwenden, um dem Element auch in dieser Richtung eine Beweglichkeit zu erhalten. Dies ist insbesondere durch eine elastische Lagerung realisierbar.

Durch eine schwimmende Lagerung kann einerseits der unterschiedlichen Wärmeausdehnungskoeffizienten des optischen Elementes und dessen Halterung, also beispielsweise einer Linse und entsprechender Linsenhalterung, Rechnung getragen werden, indem diese beispielsweise durch ein elastisches Element kompensiert werden und andererseits das optische Element, wie beispielsweise eine Linse in einer definierten Position, beispielsweise der Brennweite, gehalten werden.

Mit der schwimmenden Lagerung kann das Problem der inneren Verspannung des gelagerten Elementes vermieden werden, wenn eine axiale oder radiale Beweglichkeit für die Funktion des Aggregats nicht schädlich ist.

Bei auf dem Markt befindlichen Messgeräten werden derzeit HDPE (High Density Polyethylen) Linsen als optisches Infrarotelement verwendet, die mit Spiel in einem Linsenhalter eingebaut sind, um den unterschiedlichen Wärmeausdehnungskoeffizienten von Linsenhalter und HDPE-Linse zu berücksichtigen. Ein Verkleben ist auf Grund der mangelnden Flexibilität, der unzureichenden Haftbarkeit von UV-Klebern und der Ausgaseigenschaften von herkömmlichen Klebern nicht möglich bzw. nicht sinnvoll.

Durch eine derartige Anordnung der IR-Linse, wie sie aus dem Stand der Technik bekannt ist, ist die Position der Linse und damit der Messbereich auf dem Untersuchungsobjekt bezogen zu einer Referenz im Messgerät, wie beispielsweise einer optischen Markierungseinheit (z.B. Laser) nicht eindeutig bestimmt und ändert sich, insbesondere über die Produktlebenszeit.

Die erfindungsgemäße Ausbildung des Messsystems eines Messgerät zur berührungslosen Temperaturmessung, insbesondere eines handgehaltenes Infrarotmessgerät behebt diese Nachteile des Standes der Technik. Durch eine schwimmende Lagerung des optischen IR-Elementes eines Infrarottemperaturmessgerätes kann einerseits die Position des optischen Elementes auch für einen längeren Zeitraum definiert beibehalten werden und andererseits der unterschiedlichen Wärmeausdehnungskoeffizienten des Messsystems, insbesondere des optischen Elementes und dessen Halterung, also beispielsweise einer Linse und entsprechender Linsenhalterung, Rechnung getragen werden.

Welche Wellenlängenbereich für die gewünschte Messung optimal ist, hängt prinzipiell vom zu messenden Material und seiner Temperatur ab. Für Temperaturen um die Raumtemperatur, welche einen typischen Verwendungsbereich des erfindungsgemäßen Messgerätes darstellen, kommen Wellenlängen im Mittleren Infrarot in Frage.

Es können hierbei thermische, insbesondere pyroelektrische Sensoren, wie beispielsweise Thermosäulen (=Thermopile) zum Einsatz kommen. Bei höheren Temperaturen können auch photoelektrische Detektoren verwendet werden.

Temperaturen ab ca. 350 °C können im Nahen Infrarot mit IR-Fotodioden bestimmt werden. So hat eine Germanium-Fotodiode z.B. eine maximale Empfangswellenlänge von etwa 1,9 µm. Das besser geeignete Material InGaAs kann je nach Zusammensetzung für maximale Empfangswellenlängen von 1,9 bis 2,6 µm gefertigt werden

Temperaturen ab etwa 700 °C können mit Silicium-Fotodioden (maximale Empfangswellenlänge etwa 0,9 bis 1,1 µm) oder auch mit Vergleichsverfahren im sichtbaren Spektralbereich gemessen werden. Bei der maximalen Empfangswellenlänge von Silicium-Fotodioden (1,1 µm) hat ein Körper mit einer Temperatur von 3000 K sein Strahlungsmaximum, mit Silicium Fotodioden können jedoch alle Temperaturen oberhalb etwa 700 °C gemessen werden.

Generell ist der Temperaturmessbereich eines Pyrometers nach oben deutlich einfacher zu erweitern als nach unten, da mit steigender Temperatur die Strahlungsleistung bei allen Wellenlängen ansteigt.

Alle diese Wellenlängen werden im Rahmen der vorliegenden Schrift als Infrarot (IR) bezeichnet.

Die abhängigen Ansprüche geben vorteilhafte und/oder bevorzugte Ausführungsformen des erfindungsgemäßen Messgerätes wieder. Das optische Element des beanspruchten Messgerätes ist zwischen einem den Infrarotsensor aufnehmenden Tubus, insbesondere einen Metalltubus, und einem, den Infrarotstrahlengang umgreifendes IR-Gehäuse gelagert.

Als IR-Gehäuse wird im Rahmen dieser Anmeldung ein Gehäuse, insbesondere ein Kunststoffgehäuse verstanden, welches den Infrarotstrahlengang im Messgerät umgibt und gegenüber weiteren Komponenten des Messgeräteinnenraums abschirmt. Im IR-Gehäuse können sich insbesondere der IR-Sensor, eine IR Linse und weitere Elementes des Messsystems befinden. Das IR-Gehäuse ist in vorteilhafter Weise wiederum schwimmend im Gerätegehäuse des Messgerätes gelagert. Als Halter bzw. Anschlagelement sowohl des optischen Elementes als auch des Infrarotsensors des erfindungsgemäßen Messsystems kann in vorteilhafter Weise ein Tubus aus Metall, beispielsweise aus Aluminium oder Zink eingesetzt werden, der durch seine hohe thermische Leitfähigkeit für ein thermisches Gleichgewicht sorgt und mit seiner Wärmekapazität das Messsystem robust gegen schnelle Temperaturänderungen machen.

Ist der Infrarotsensor mechanisch und thermisch an den Metalltubus angekoppelt, so kann dessen thermische Masse genutzt werden, die Temperatur des IR-Sensors möglichst konstant zu halten.

In vorteilhafter Weise kann der Tubus derart im oder am IR-Gehäuse angeordnet sein, dass das IR-Gehäuse das optische Element an den Tubus andrückt. Der direkte Kontakt von Tubus und optischem Element führt dabei ebenfalls zu einer thermischen Stabilisierung des optischen Elementes.

In vorteilhafter Weise wird das optische Element mittels eines elastischen Elementes gegen den Tubus gedrückt, so dass die Position, insbesondere eine axiale Position des optischen Elementes definiert ist, eine gewisse Beweglichkeit des Elementes - beispielsweise aufgrund einer deutlichen Temperaturänderung - aber gegeben wäre.

Das elastische Element kann dabei beispielsweise ein Schaumstoffelement, insbesondere ein Schaumstoffring, sein, das eine schwimmende Lagerung des optischen Elementes gewährleistet, das optische Element aber in seiner insbesondere axialen Position hält.

Alternative Ausführungsformen des elastischen Elementes wären beispielsweise, insbesondere federnde, Andruckelemente für das optische Element, welche dessen schwimmende Lagerung gewährleisten.

In einer Ausführungsform kann vorgesehen sein, dass eine Klebeschicht auf der zum optischen Element gewandten Seite des elastischen Elementes vorgesehen ist. Die Positionstreue des optischen Elementes kann durch eine solche Klebeschicht auf der zur Linse gewandte Schaumstoffseite des elastischen Elementes, die vorteilhafterweise als Film statt als Tape ausgeführt wird, um die Elastizität des Schaumstoffs nicht zu verringern, noch verbessert werden.

Alternativ kann auch eine Klebeschicht verwendet werden, die nur den Tubus bedeckt und die Linse selbst aber ausspart.

In alternativen Ausführungsformen oder zusätzlich kann das elastische Element auch direkt im andrückenden Element (IR-Gehäuse) oder direkt in das optische Element, beispielsweise durch ein 2K-Spritzgusstechnik, integriert werden.

Die Andruckflächen bzw. Andruckelemente des IR-Gehäuses auf den Schaumstoff des elastischen Elementes werden vorteilhafterweise als sternförmige Rippen ausgeführt, um eine Verformung des optischen Elementes auf Grund von unterschiedlichen Wärmeausdehnungskoeffizienten von optischem Element und IR-Gehäuse zu vermeiden.

Auf Grund von Beschränkungen beim Herstellungsverfahren des insbesondere in Kunststoff ausgebildeten IR-Gehäuse - hier könnte ein Spritzgussverfahren Verwendung finden - könnte von einer sternförmigen Anordnung der Andruckflächen bzw. Andruckelemente des IR-Gehäuses auch abgewichen werden, allerdings sollte auch dann die Ausführungsform so gut wie möglich der Sternform angenähert ein. Parallele Andruckelemente wären ebenso möglich.

Das optische Element selbst ist in einer vorteilhaften Ausführungsform als Linse bzw. IR-Linse, vorteilhafter Weise insbesondere auch als Fresnel-Linse, ausgebildet. Die Linse kann aus Glas, insbesondere einem Quarzglas bestehen. Für den mittleren IR-Bereich ist es gegebenenfalls sinnvoll, die Linsen gegebenenfalls auch aus Kristallen wie Germanium, CaF2, ZnS, ZnSe, KRS5 oder auch aus Polyethylen (PE) oder Polypropylen (PP) auszubilden.

Alternativer Weise könnte das optische Element zur Bündelung der IR-Strahlung auch als diffraktives Element (DOE = Diffractive Optical Element) realisiert sein.) Für ein solches Element gelten die nachfolgenden Überlegungen entsprechend, nur das die refraktiven Eigenschaften und Komponenten entsprechend durch die diffraktiven zu ersetzen wären.

Die Fresnel-Struktur des als Linse ausgebildeten optischen Elementes kann beidseitig oder vorteilhafter Weise auch lediglich auf einer Seite des - insbesondere im Wesentlichen ebenen - optischen Elementes ausgebildet sein. Vorteilhafterweise wird die Fresnel-Struktur dann zum Sensor gerichtet sein, um Verschmutzungen auf der Linse zu erschweren.

Um ein Verhaken und eine damit verbundene Verformung der IR-Linse während der Expansion, insbesondere einer thermisch induzierten Expansion, zu vermeiden, verfügt die IR-Linse vorteilhafter Weise über einen Rand bzw. Rahmen ohne Rillen bzw. Fresnel-Struktur. Mit diesem Rand bzw. Rahmen liegt diese auf dem Tubus, insbesondere einem Aluminiumtubus, auf. Der direkte und flächige Kontakt der IR-Linse mit dem Tubus, insbesondere einem Metalltubus, verbessert gleichzeitig den thermischen Kontakt von Linse zu Tubus im Vergleich zu einer aufliegenden Rillenstruktur. Der direkte Kontakt von Tubus und optischem Element führt dabei vorteilhafter Weise ebenfalls zu einer thermischen Stabilisierung des optischen Elementes.

Der oben genannte thermische Kontakt führt zu einer Genauigkeitsverbesserung des Messgerätes im Fall von Temperaturwechseln, da der Tubus thermisch mit dem Infrarotsensor/Thermopile verbunden ist und damit auch das gesamte System von Infrarotsensor-Tubus-Linse schnell in ein thermisches Gleichgewicht gebracht werden kann.

Durch die gute thermische An- bzw. Verbindung ist das System (Tubus, IR-Linse, Infrarotsensor) gut abgedichtet, weswegen vorteilhafterweise ein Entlüftungskanal in der Anordnung vorgesehen sein kann, um einen Druckausgleich, insbesondere des Innenraums des Tubus, zu gewährleisten und damit unerwünschte Verformungseffekt der Linse durch insbesondere thermisch induzierte Druckänderungen zu vermeiden.

Darüber hinaus kann über einen solchen Belüftungskanal auch der Bauraum zwischen Linse und Infrarotsensor entfeuchtet werden, was wiederum unerwünschte Kondensationseffekte auf der IR-Linse bzw. dem Thermopile-Detektor verhindert.

Weitere Vorteile des erfindungsgemäßen Messgerätes ergeben sich aus der nach folgenden Beschreibung eines Ausführungsbeispiels.

### Kurze Beschreibung der Figuren

Im Folgenden wird die Erfindung mit Bezug auf die beigefügten Figuren genauer beschrieben. Dabei werden Ausführungsformen der Erfindung und darin enthaltene Teilaspekte mit Bezug auf die beigefügten Figuren beschrieben. Die Figuren sind lediglich schematisch und nicht maßstabsgetreu. Gleiche oder ähnliche Bezugszeichen in den Figuren bezeichnen gleiche oder ähnliche Elemente.

Es zeigen:
- Fig. 1: eine perspektivische Übersichtsdarstellung eines erfindungsgemäßen Messgerätes,
- Fig. 2: eine Innenansicht eines Teils des Messgerätes gemäß Figur 1,
- Fig. 3: eine Innenansicht des Messgerätes gemäß Figur 2 mit eingesetzten Tubus, sowie Optikhalterung und Umgebungstemperatursensorgehäuse,
- Fig. 4: eine Detailansicht des auf einer Leiterplatte angebrachten Tubus inklusive Optikhalterung,
- Fig. 5: Tubus und Infrarotgehäuse des erfindungsgemäßen Messgerätes in einer Schnittdarstellung,
- Fig.6: Tubus und Infrarotgehäuse des erfindungsgemäßen Messgerätes in einer alternativen Darstellung,
- Fig.7: einen Ausschnitt des Infrarotgehäuse des erfindungsgemäßen Messgerätes im Bereich der IR-Linsenhalterung,
- Fig.8: eine IR-Linse in Form einer Fresnel-Linse in einer schematischen Darstellung,
- Fig.9: Anordnung von Tubus und IR-Linse des erfindungsgemäßen Messgerätes,
- Fig.10: Anordnung von Tubus und IR-Linse des erfindungsgemäßen Messgerätes in einer alternativen Darstellung.

### Beschreibung eines Ausführungsbeispiels

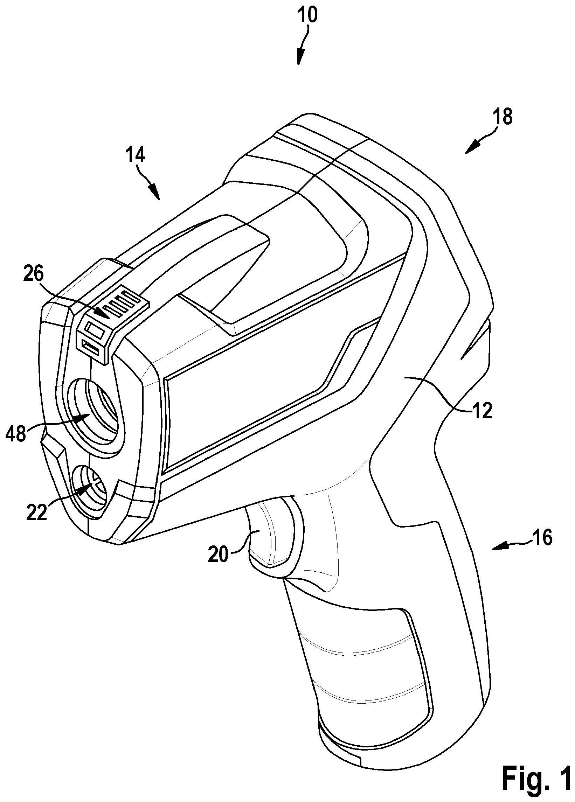

Figur 1 zeigt ein erfindungsgemäßes Messgerät 10 zur berührungslosen Temperaturmessung in einer perspektivischen Übersichtsdarstellung. Das Messgerät 10 der Figur 1 ist als ein handgehaltenes Infrarotmessgerät mit Infrarotsensor ausgebildet.

Das erfindungsgemäße Messgerät 10 besitzt ein Gerätegehäuse 12 mit einem Messkopf 14, sowie einen Griffbereich 16, um das Messgerät handgehalten zu Bedienen. Am Griffbereich 10 ist ein Messschalter 20 ausgebildet, mit dem unter anderem eine Temperaturmessung mit dem Gerät gestartet werden kann.

Gleichzeitig mit der eigentlichen Temperaturmessung oder auch dieser vorgeschaltet, kann mit dem erfindungsgemäßen Messgerät ein optisch sichtbares Signal, beispielsweise eine Lasermarkierung, ausgesandt werden, die einem Anwender anzeigt, welcher Bereich einer gerade anvisierten Oberfläche hinsichtlich seiner Temperatur vermessen werden würde. Dazu besitzt das erfindungsgemäße Messgerät eine optische Markierungseinheit 22, die auf das Sichtfeld des Thermodetektors des Messgerätes ausgerichtet ist. Die optische Markiereinheit 22 kann beispielsweise einen einzelnen Messpunkt erzeugen, der das Zentrum der Infrarotmessung definiert. Vorteilhaft ist es, wenn die optische Markiereinheit den Bereich der Infrarotmessung dadurch markiert, dass die diesen in seinen Grenzen aufzeigt. Dazu kann beispielweise ein diffraktives Element 78 genutzt werden, welches den Bereich, der zur Temperaturmessung herangezogen wird, insbesondere kreisförmig mit einer entsprechenden Lasermarkierung umschließt.

Die optische Markierungseinheit 22 kann alternativ oder auch zusätzlich aber auch eine Kamera, insbesondere eine Digitalkamera, umfassen. Damit ist es dann möglich, dass der anvisierte Messbereich auf einem Display des erfindungsgemäßen Messgerätes darstellbar ist. Die Kamera, insbesondere eine Digitalkamera, nimmt den erweiterten Messbereich der Oberflächen-Temperaturmessung auf. In dieses Kamerabild, welches über ein Display des Messgerätes wiedergegeben werden kann, kann dann auch der beispielsweise rechnerisch ermittelte genaue Messort der Temperaturmessung eingeblendet werden, um einem Anwender zu visualisieren, an welcher Stelle genau die Oberflächentemperatur gemessen wird.

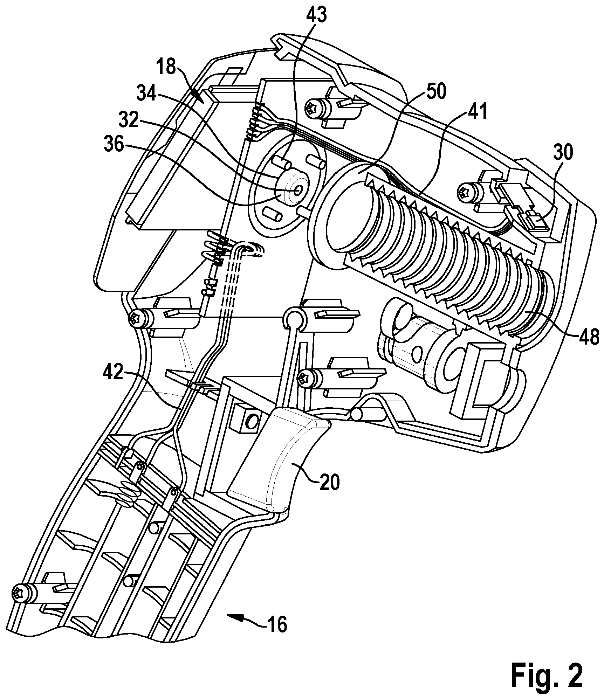

Im Messkopf 14 des erfindungsgemäßen Messgerätes 10 ist unter anderem ein, in Figur 1 nicht weiter dargestellter, Infrarotsensor 32 angeordnet (siehe hierzu insbesondere auch Figur 2, 9 und 10), der die von einem Messobjekt emittierte und über ein Linsenelement gebündelte IR-Strahlung zur Temperaturbestimmung detektiert.

Als Temperatursensor für die berührungslose Temperaturmessung kann hierbei beispielsweise ein Thermopile-Detektor oder auch eine Photosensor, wie beispielsweise eine Photodiode, genutzt werden.

Ein Thermopile-Detektor oder auch Thermosäule ist ein Detektor für elektromagnetische Strahlung in einem weiten Wellenlängenbereich, welcher auf der Absorption der Strahlung und der Messung des entstehenden Wärmestromes entlang eines Wärmeleiters beruht. Grundbestandteil eines solchen Thermopiles ist ein Thermoelement, dessen eine Verbindungsstelle geschwärzt und bestrahlt, die andere vor der Bestrahlung geschützt wird. Meist werden mehrere solcher Elemente hintereinandergeschaltet, so dass die bestrahlten Stellen eine Fläche bilden. In diesem Fall bilden die Thermoelemente selbst den Wärmeleiter.

Andere Temperatursensoren sind erfindungsgemäß aber natürlich ebenso möglich.

Die von einem Messobjekt ausgesandte und vom Infrarotsensor über eine IR-Linse aufgesammelte IR-Strahlung wird detektiert und aus dieser wird die Oberflächentemperatur des Messobjekts bestimmt. Dazu besitzt das erfindungsgemäße Messgerät eine Rechen- und Auswerteinheit, um das Detektionssignal in einen Temperaturwert umzusetzen.

Der ermittelte Temperaturwert kann mittels einer Ausgabeeinheit, insbesondere eines Displays 18, welches auf der der Messrichtung abgewandten Seite des GeräteGehäuses 12 angeordnet ist, dargestellt werden. So kann beispielsweise ein Temperaturwert ausgegeben werden oder relative Temperaturverhältnisse, farblich codiert, angezeigt werden.

Figur 2 zeigt ein geöffnetes erfindungsgemäßes Messgerät, insbesondere den Messkopf 14 eines solchen Messgerätes, zur weiteren Verdeutlichung des mechanischen, elektrischen und thermischen Aufbaus eines möglichen Messkopfs des erfindungsgemäßen Messgerätes.

Neben einem Umgebungstemperatursensor 30, ist insbesondere ein Infrarotsensor 32 zur berührungslosen Objekttemperaturmessung im Gehäuse 12 des Messgerätes 10 vorgesehen. Im Ausführungsbeispiel der Figur 2 ist der Infrarottemperatursensor 30 als ein Thermopile-Detektor zur berührungslosen Objekttemperaturmessung ausgebildet. Der Aufbau und die Funktionsweise derartiger Detektoren sind, soweit nicht bereits oben beschrieben, bekannt und brauchen daher an dieser Stelle nicht weiter dargelegt zu werden.

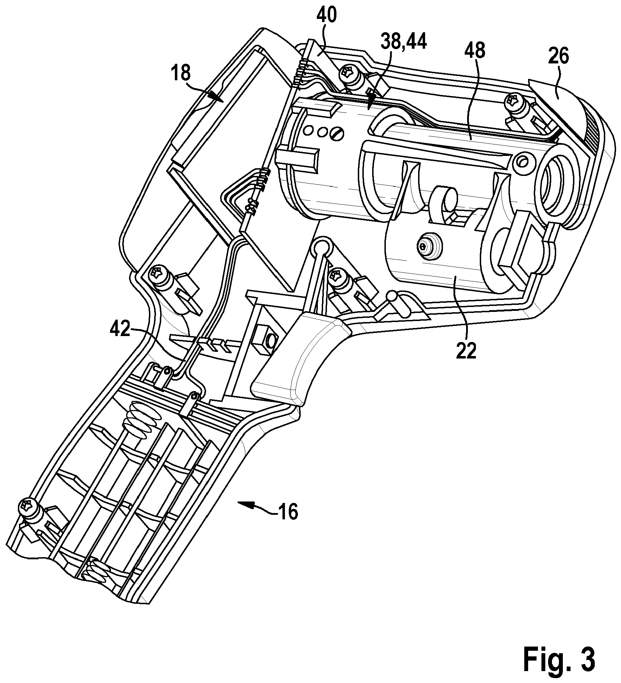

Der Infrarotsensor 32 ist, ebenso wie der Umgebungstemperaursensor 30, über elektrische Verbindungsmittel 41 mit einer Rechen- und Auswerteinheit des Messgerätes 10 verbunden, die sich insbesondere auf der Rückseite einer als Trägerelement für den Infrarotsensor ausgebildeten Leiterplatte 40 befindet. Diese Leiterplatte 40 und damit auch die nachgeschaltete Elektronik des Messgerätes werden über eine geräteinterne Energieversorgung und entsprechende Verbindungsmittel 42 mit elektrischer Energie versorgt. Als Energiequelle können hier Batterien, wiederaufladbare Batterien oder auch Akku-Systeme verwendet werden. Besonders vorteilhaft bietet sich die Verwendung von Lithium-Ionen Akkus mit standardisierter Ausgabespannung an. So kann das erfindungsgemäße Messgerät beispielsweise mit einem 3,6V oder einem 7,2V oder einem 10,8V Akku-System betrieben werden. Das jeweilige Energiespeichermedium kann fest im Gehäuse des Messgerätes, insbesondere im Inneren des Handgriffs 16, installiert sein, oder wie in der Ausführungsform der Figuren 2 und 3 wechselbar sein. Besonders vorteilhaft sind hierbei Wechselakkus, die sich, insbesondere von unten, in den Handgriff 16 des Messgerätes einschieben, bzw. aus diesem herausnehmen lassen.

Zur Überwachung der Temperatur des Infrarotsensors 32 und/oder seiner unmittelbaren Umgebung ist zumindest ein weiterer Temperatursensor 34 vorgesehen. Dieser weitere Temperatursensor 34 ist in direkter Nähe des Infrarotsensors 32 angebracht und ermöglicht es, die Temperatur des Infrarotsensors 32 bzw. dessen unmittelbare Umgebungstemperatur zu bestimmen. Der Infrarotsensor 32 und der weitere Temperatursensor 34 befinden im Ausführungsbeispiel der Figur 2 vorteilhafter Weise in einem Gehäuse. Dieses Gehäuse könnte beispielsweise ein, in Figur 2 der Übersichtshalber entfernter Tubus 44 sein, der als thermische Masse für den Infrarotsensor dient. In Figur 2 sind lediglich dessen Befestigungselemente 43 eines solchen Tubus 44 sichtbar. Ein solcher Tubus kann in vorteilhafter Weise aus einem Metall, beispielsweise Aluminium gefertigt sein und stellt dann eine nicht zu vernachlässigende thermische Masse zur Stabilisierung der Temperatur des Infrarotsensors dar.

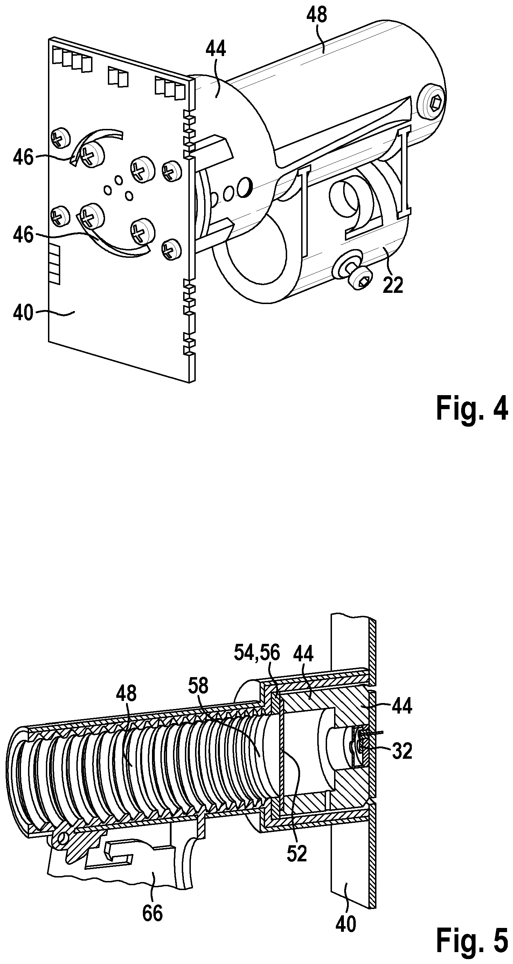

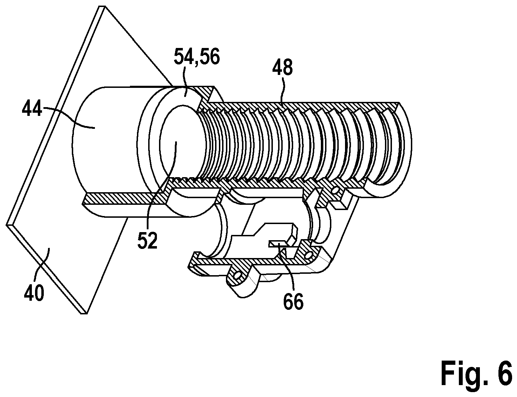

Figur 3 zeigt den in das Messgerät eingesetzten Tubus 44 mit einem Infrarotgehäuse (IR-Gehäuse) 48 und einer am Infrarotgehäuse 48 angebrachten optischen Markiereinheit 22 zur Visualisierung des Messbereichs der IR-Temperaturmessung, d.h. desjenigen Bereiches, dessen Strahlung in das Messgerätegehäuse einfällt und über ein sich darin befindliches IR-Gehäuse und eine IR-Linse 52 auf den Infrarotsensor 32 gelangt. Das IR-Gehäuse 48 schirmt dabei den IR-Strahlengang gegenüber dem restlichen Innenraum des Messgerätegehäuses ab. Das IR-Gehäuse 48 kann dabei frontal am Tubus 44 anliegen oder diesen mit einer entsprechenden Aufnahme 68 auch umschließen, wie dies insbesondere in den Figuren 5 und 6 dargestellt ist.

Figur 4 zeigt die Anordnung von Tubus 44, Infrarotgehäuse 48 mit optischer Markierungseinheit 22 und zugehöriger Leiterplatte 40 in einer Detaildarstellung, auf die später noch eingegangen werden soll.

Nachfolgend soll jedoch zuerst die Anordnung von Infrarotsensor 32 und IR-Linse 52 etwas näher beschrieben werden und einige vorteilhafte Ausgestaltungen für das erfindungsgemäße Messgerät dargelegt werden. Diese Ausgestaltungen können für sich, d.h. einzeln in einem erfindungsgemäßen Messgerät realisiert sein oder aber auch in unterschiedlichen Kombinationen vorhanden sein.

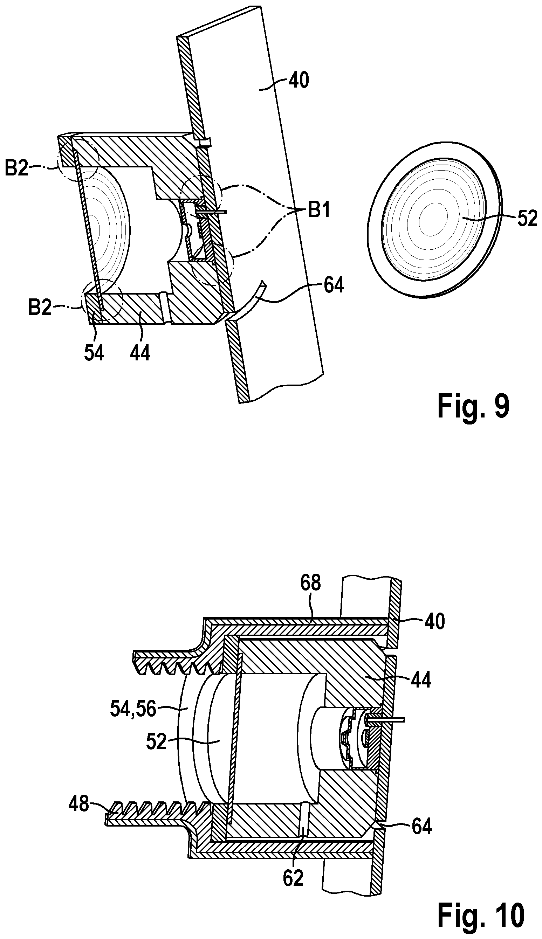

Zur thermischen Stabilisierung ist das im Ausführungsbeispiel verwendete Thermopile-Element 32 zur Detektion der infraroten Strahlung mechanisch an einen Tubus 44 in Form eines Alu-Hohlzylinders gekoppelt, der zum Einen als Befestigungselement für das Thermopile 32 und weiterer optischer Elemente, wie beispielsweise eine Fokussierlinse 52 dient, zum Anderen jedoch auch, wie bereits erwähnt, eine thermische Masse darstellt, um die Umgebungstemperatur des Thermopile-Detektors 52 möglichst konstant zu halten (Siehe hierzu insbesondere auch Figur 5, 6 und 9) In Figur 9 ist der Bereich B1 der thermische Kontaktierung zwischen Infrarotsensor 32 und Metalltubus 44 zur Verdeutlichung eingezeichnet. Der thermische Kontakt von Infrarotsensor 32 und Metall-Tubus 44 führt zu einer Genauigkeitsverbesserung des Messgerätes im Fall von Temperaturwechseln, da der Tubus 44 thermisch mit dem Infrarotsensor/Thermopile 32 verbunden ist und damit das Gesamt-System Infrarotsensor/Thermopile-Tubus schnell in ein thermisches Gleichgewicht bringt.

Man kann die Temperaturempfindlichkeit des IR-Sensors 32 und insbesondere eines Thermopile Detektors durch eine Strahlungskonzentration auf die Detektionsfläche des Sensors 32 mit Hilfe einer IR-Linse 52 steigern. Die IR-Linse 52 oder ein anstelle der Linse in das Gerät eingebrachtes Fenster kann aus Glas, insbesondere einem Quarzglas bestehen. Für den mittleren IR-Bereich ist es gegebenenfalls sinnvoll, die Linsen bzw. Fenster gegebenenfalls auch aus Kristallen wie Germanium, CaF2, ZnS, ZnSe, KRS5 oder auch aus Polyethylen (PE) oder Polypropylen (PP) auszubilden.

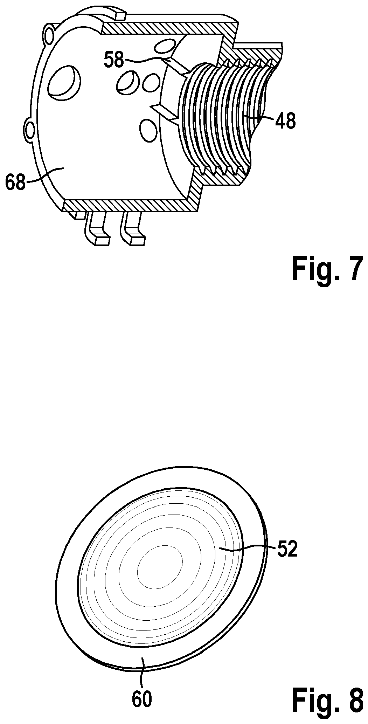

Figur 5 und Figur 9 zeigen eine mögliche Anordnung von IR-Linse 52 und Infrarotsensor 32 zueinander. Der Infrarotsensor 32 ist auf einer Leiterplatte 40 angeordnet und steht zudem in thermischen Kontakt mit einem Tubus 44, der im Ausführungsbeispiel als Aluminiumtubus ausgeführt ist. Eine IR-Linse 52, die im Ausführungsbeispiel der Figur 5 als Fresnel-Linse ausgebildet ist (Siehe hierzu auch Figur 8, bzw. Figur 9) wird über ein elastische Element 54 in Form eines Schaumstoffringes 56 an den Tubus 44 derart angedrückt, dass die IR-Linse 52 schwimmend zwischen Tubus 44 und IR-Gehäuse 48 gelagert ist. Durch eine schwimmende Lagerung mittels Schaumstoffring 56 und einem zusätzlichen Bauteil (hier das IR-Gehäuse 48), das die IR-Linse 52 auf den Aluminiumtubus 44 drückt, können einerseits die unterschiedlichen Wärmeausdehnungskoeffizienten dieser Komponenten kompensiert werden und andererseits die IR-Linse 52 in einer Position gehalten werden. Die IR-Linse 52 kommt somit zwischen dem Tubus 44 und dem IR-Gehäuse 48, insbesondere den Andruckelementen 58 des IR-Gehäuses zu liegen.

Die Positionstreue der IR-Linse 52 kann durch eine Klebeschicht, insbesondere auf der zur Linse 52 gewandten Schaumstoffseite, noch verbessert werden. Dazu kann die Klebeschicht vorteilhafterweise als Film statt als Tape ausgeführt wird, um die Elastizität des Schaumstoffs nicht zu verringern. Alternativ könnte auch eine Klebeschicht verwendet werden, die nur den Tubus 44 bedeckt und die Linse 52 selbst ausspart.

Das elastische Element 54, welches in den Ausführungsbeispielen der Figuren 5, 6, 9 und 10 als Schaumstoffring ausgebildet ist, kann in alternativen Ausführungsformen auch direkt im andrückenden Element, wie hier dem IR-Gehäuse 48 oder auch direkt an der IR-Linse 52, insbesondere einstückig, ausgebildet werden. Beispielsweise lässt sich das elastische Element durch 2K-Spritzgusstechnik in den anderen Bauelementen direkt integrieren.

Die Andruckflächen des IR-Gehäuses 48 auf den Schaumstoff des elastischen Elementes 56 werden vorteilhafterweise als Rippen, insbesondere sternförmig oder radial verlaufende Rippen 58 ausgeführt, um eine Verformung der IR-Linse 52 auf Grund von unterschiedlichen Wärmeausdehnungskoeffizienten von IR-Linse und IR-Gehäuse zu vermeiden.

Figur 7 zeigt die Andruckflächen für das Schaumstoffelement noch einmal in einer Detailansicht des IR-Gehäuses. Im Ausführungsbeispiel der Figur 7 sind die Rippen 58 nicht sternförmig angeordnet, sondern aufgrund von Herstellungserfordernisse bei Spritzgussherstellungsverfahren nahezu parallel ausgerichtet. Das Design sollte jedoch - soweit irgend möglich - so gut wie möglich der Sternform angenähert werden, um eine entsprechend gute Entkopplung zu erzielen. Figur 7 zeigt auch ein im IR-Gehäuse 48 ausgebildete Aufnahme 68 für den Tubus 44. Das IR-Gehäuse 48 in dieser Ausführungsform umschließt somit den infraroten Strahlengang einschließlich des Metalltubus 44, wie die auch in den Ausführungsbeispielen der Figuren 5, 6 und 10 zu sehen ist.

Figur 6 zeigt die mechanische Lagerung der IR-Linse 52 nochmals aus einer anderen Perspektive. Die IR-Linse 52 wird, vermittelt über einen Schaumstoffring 56, durch das IR-Gehäuse 48 auf den, auf der Leiterplatte befestigen Tubus 44 gedrückt (Siehe hierzu auch Figur 5 und 10). Vorteilhafterweise ist dabei - wie in den Figuren 6, 9 und 10 angedeutet - die Fresnel-Struktur der IR-Linse 52 zum Sensor 32 hin gerichtet, um Verschmutzungen auf der Linse zu erschweren.

Um ein Verhaken und eine damit verbundene Verformung der IR-Linse 52 während einer Expansion, insbesondere einer thermisch induzierten Expansion, der Bauteile zu vermeiden, verfügt die IR-Linse 52 über einen Rand bzw. Rahmen 60 ohne eine Struktur, insbesondere eine optische brechende Struktur, wie beispielsweise Rillen oder auch prismatische Elemente. Der Rand 60 ist typischerweise eben und flach ausgebildet und weist zwei zueinander parallele Oberflächen auf.

Mit diesem ebenen Teil der Fresnel-Linse 52 liegt diese auf dem Tubus 44, insbesondere dem Aluminiumtubus, auf. (siehe hierzu insbesondere Figuren 5, 9 und 10). Dies verbessert gleichzeitig den thermischen Kontakt von IR-Linse 52 und Tubus 44 im Vergleich zu einer aufliegenden Rillenstruktur. Die thermische Kontaktierung von IR-Linse 52 und Tubus 44 ist in Figur 9 im Bereich B2 verdeutlicht.

Der oben genannte thermische Kontakt führt zu einer Genauigkeitsverbesserung des Messgerätes im Fall von Temperaturwechsel, da - wie bereits beschrieben - der Tubus 44 in vorteilhafter Weise thermisch mit dem Infrarotsensor gekoppelt ist und damit das gesamte System IR-Sensor, Tubus, IR-Linse schnell in ein thermisches Gleichgewicht gebracht werden kann.

Durch die beschriebene gute thermische Anbindung ist das System aus Tubus, IR-Linse und IR Sensor auch mechanisch gut abgedichtet, so dass vorteilhafterweise ein Entlüftungskanal 62 vorgesehen ist, um einen Druckausgleich zwischen dem Bauraum 70 des Tubus 44 und einem Außenbereich zu gewährleisten und damit unerwünschte Verformungseffekt der Linse zu vermeiden. Der Entlüftungskanal 62 kann, wie beispielsweise in Figur 10 dargestellt, durch eine seitliche Bohrung im Tubus ausgebildet sein, so dass sich ein Luftspalt zwischen Tubus 44 und dem IR-Gehäuse 48 ergibt. Der Entlüftungskanal 62 mündet in einer oder mehreren Nut(en) 64 in der den Tubus 44 und den Infrarotsensor 32 aufnehmenden Leiterplatte 40.

Darüber hinaus kann so auch der Bauraum 70 zwischen Linse 44 und Infrarotsensor 32 entfeuchtet werden, was wiederum unerwünschte Kondensationseffekte auf der IR-Linse 52 und/oder dem beispielsweise als Thermopile ausgebildeten Infrarotsensor 32 verhindert.

Die Länge des metallenen Tubus 44 kann vorteilhafter Weise auf den Abstand IR-Sensor 32 zu IR-Linse 52 begrenzt werden, wobei die oben erwähnten thermischen und mechanischen Eigenschaften des Sensorsystems weiterhin gewährleistet sind. Als Apertur und Träger des optischen Systems kann aber vorteilhafter Weise dann ein Kunststoffteil genutzt werden, welches unter anderem als IR-Gehäuse 48 dient. Dieses IR-Gehäuse kann insbesondere auch den Tubus 44, der als thermische Masse wirkt, aufnehmen oder zumindest umschließen, wie dies beispielsweise in den Figuren 3 und 10 verdeutlicht ist. Diese Reduzierung des Metalltubus44 auf die Länge zwischen IR-Linse 52 und Infrarotdetektor 32 führt aufgrund der geringeren Materialkosten des aus Kunststoff gefertigten IR-Gehäuses 48 zu einer deutlichen Kostenersparnis bei dem erfindungsgemäßen Messgerät.

Darüber hinaus kann so auch vorteilhaft, da platzsparend eine optische Markierungseinheit 22 für den Messbereich der berührungslosen Temperaturmessung direkt in das optische System integriert werden. Die Figur 5 und 6 zeigen jeweils unterhalb des eigentlichen IR-Gehäuses 48 Teile einer Halterung 66 für eine solche optische Markierungseinheit. In den Figuren 3 und 4 ist die optische Markierungseinheit 22 in baulicher Einheit zum IR-Gehäuse 48 dargestellt. Eine solche optische Markierungseinheit 22 lässt sich in vorteilhafter Weise durch einen sichtbaren Laser realisieren, der auf die optische Achse der Infrarot-Temperaturmessung ausgerichtet ist. Eine optische Markierungseinheit 22 in Form einer Kamera, insbesondere digitalen Kamera ist, wie beschrieben, ebenso möglich.

Durch die direkte Ankopplung der optischen Markierungseinheit 22 an das IR-Gehäuse 48 kann auch eine schwimmende Lagerung des gesamten optischen Systems (Infrarot und sichtbare Optik) im Gehäuse 12 des Messgeräts erreicht werden, wie dies in Figur 2 dargestellt ist. Insbesondere ist dies ohne Genauigkeitsverlust der Anzeige des Messbereichs durch die optische Markierungseinheit 22 möglich, da die optische Markierungseinheit direkt am IR-Gehäuse 48 befestigt ist. Zudem wird damit gleichzeitig auch der thermische und mechanische Kontakt zum Hauptgehäuse 12 des erfindungsgemäßen Messgerätes und dessen Einfluss auf die Messgenauigkeit reduziert.

Um den möglichen Einbaupositionen der IR-Linse 52 und dem damit verbundenen unterschiedlichen Messbereichen des Infrarotsensors Rechnung zu tragen, kann die optische Markierungseinheit zur optischen Empfangsachse der IR-Strahlung hin ausgerichtet werden.

Hierbei kann beispielsweise als vorderes Lager und gleichzeitigen Toleranzausgleich ebenfalls ein elastisches Element (beispielsweise wiederum ein Schaumstoffring) eingesetzt werden. Als hinteres Lager und Justierungseinheit können kostensparend und fertigungsoptimiert ein Federelement 72 (siehe Figur 1 oder 2) sowie zwei Schrauben 74 eingesetzt werden.

Durch den Einsatz eines Kunststoffhalters 66 können insbesondere selbstschneidende Schrauben verwendet werden, was ein zusätzliches Sichern der Schrauben unnötig macht. Vorteilhafterweise sind die Stellschrauben 74 mit einem abgerundeten Ende versehen, um eine möglichst gleichlaufende Bewegung der optischen Markiereinrichtung bzw. des Lasers während der Justierung zu gewährleisten.

Eine Verbesserung der Messgenauigkeit des Detektionssystems kann weiterhin auch dadurch erzielt werden, dass alle Wärmequellen (beispielsweise sich elektrisch erwärmende Bauteile) und mechanischen Störquellen (beispielsweise Auslöseschalter 20 oder auch ein Messmodi-Taster) vom Infrarotsensor 32 selbst weitestgehend entkoppelt werden.

Dies kann durch den Einsatz von mehreren Leiterplatten, die mittels elektrischer Verbindungsleitungen angebunden sind oder auch durch Nuten 64 in der Leiterplatte realisiert werden, die den Wärmefluss über die Leiterplatte unterbinden können. (Siehe hierzu beispielsweise auch Figur 4)

Das Messgerät 10 weist - wie bereits beschrieben - darüber hinaus einen zusätzlichen Temperatursensor 30 zur Bestimmung der Umgebungstemperatur Tᵤ auf (siehe auch Figur 2). Der Umgebungstemperatursensor 30 ist in einem separaten Extra-Gehäuse 26 angeordnet, welches weitgehend thermisch vom Gerätegehäuse 12 getrennt ist.

Vorteilhaft ist dabei die reduzierte Wechselwirkung zwischen dem Umgebungstemperatursensor 30 und thermischen Störgrößen, bei gleichzeitig gutem Schutz der Sensorik gegenüber äußeren Einflüssen, wie beispielsweise einem Sturz oder Stoß. Dazu wird im vorliegenden Messgerät auf ein exponiertes Gehäuseteil für die Umgebungstemperatursensorik verzichtet.

Dies bedeutet insbesondere auch die Verwendung einer geringen thermischen Masse für die Leiterplatte (PCB), auf welcher der Sensor 30 für die Umgebungstemperatur aufgebracht ist. So wird hierzu beispielsweise eine Leiterplatte verwendet, die in ihren geometrischen Maßen, die geometrischen Maße des Sensors nur geringfügig übertrifft.

Weiterhin ist die Leiterplatte für den Umgebungssensor inkl. Sensor bestmöglich vom Hauptgehäuse des Messgerätes mechanisch und thermisch zu entkoppeln. Dies wird erreicht, indem die Leiterplatte (PCB) inkl. Sensor in einem Extra-Gehäuse 26 für den Umgebungstemperatursensor eingebracht wird, welches wiederum bestmöglich vom Hauptgehäuse 12 thermisch entkoppelt wird, indem die Anzahl der Berührungspunkte zwischen beiden Gehäusen sowie deren überlappende Flächen möglichst gering ausgeführt wird.

Dazu sind bei dem erfindungsgemäßen Messgerät Mittel 28 vorgesehen, die es gewährleisten, dass das Extra-Gehäuse 26 vom Gehäuse 12 der Vorrichtung thermisch entkoppelt ist. So kann zur thermischen Entkopplung das Extra-Gehäuse 26 für den zusätzlichen Umgebungstemperatursensor 30 lediglich über kleine Stege bzw. Beinchen 28 mit dem Hauptgehäuse 12 des Messgerätes verbunden sein.

Die Stege 28 zur Befestigung des Extra-Gehäuses 26 im Gerätegehäuse 12 können einstückig mit dem Extra-Gehäuse 26 verbunden sind. Alternativerweise könnten die Stege bzw. Beinchen zur Befestigung des Extra-Gehäuses 26 im Gerätegehäuse 12 einstückig mit dem Geräte-Gehäuse 12 verbunden sind.

In vorteilhafter Weise ist das Extra-Gehäuse 26 des Umgebungstemperatursensors 30 dabei an zumindest drei, insbesondere vier Seiten von dem Gerätegehäuse 12 umgeben und passt sich dabei insbesondere der Kontur des Messkopfs 14 des erfindungsgemäßen Messgerätes an.

Das Extra-Gehäuse 26 ist dabei weitgehend offen ausgebildet, um einen direkten Austausch mit der Umgebungsluft zu realisieren. Das Extra-Gehäuse 26 ist insbesondere an seiner nach außen gewandten Oberfläche weitgehend geöffnet bzw. besitzt lediglich ein schützende Gitter oder Streifenstruktur.

Vorteilhaft ist es auch möglich, dass das Material des Extra-Gehäuses 26 unterschiedlich zum Material des Gerätegehäuses 12 ausgebildet ist. So kann das Extra-Gehäuse 26 als ein Metallgehäuse ausgebildet sein.

Das Extra-Gehäuse 26 für den Umgebungstemperatursensor 30 ist dabei aber in die Gehäusekontur des Messgehäuses 12 des Gerätes integriert, so dass keinerlei hervorstehende Ecken oder kannten bei einem Fall oder Stoß des Messgerätes aufgrund ihrer exponierten Position beschädigt werden können.

In einem Mess-Modus kann das erfindungsgemäße Messgerät beispielsweise auch eine Raum- und/oder Oberflächentemperatur messen, die Werte in Relation setzen, die Daten interpretieren und auf diese Weise Wärmebrücken detektieren. Das Ergebnis kann per LED angezeigt werden. Die exakten Messwerte lassen sich auf dem Display ablesen. Für die Oberflächentemperaturmessung wird dabei der geräteinterne Infrarotsensor, für die Raumtemperaturmessung der Umgebungstemperatursensor genutzt.

In einem weiteren Mess-Modus kann der Thermodetektor auch zusätzlich zur Raum- und Oberflächentemperatur die Luftfeuchtigkeit messen. Dazu besitzt das erfindungsgemäße Messgerät auch einen Feuchtesensor. Anhand dieser drei Werte ist es dann auch möglich, schimmelgefährdete Stellen in einem Haus zu definieren bzw. zu detektieren. Besteht akute Schimmel-Gefahr, so kann das Gerät mit roter LED oder beispielsweise auch akustisch warnen. Auch in diesem Messmodus können die exakten Messergebnisse in einem Display ablesbar sein.

Das erfindungsgemäße Messgerät misst entsprechend dem gewählten Mess-Modus die Raumtemperatur, die Oberflächentemperatur von Wänden und Objekten oder auch die relative Luftfeuchtigkeit. Temperaturen werden dabei insbesondere nach dem erfindungsgemäßen Verfahren gemessen.

Das erfindungsgemäße Messgerät zur berührungslosen Messung von Objekttemperaturen ist nicht auf die in der Beschreibung vorgestellten konkreten Ausführungsformen beschränkt. Diese zeigen lediglich eine Möglichkeit der Realisierung eines erfindungsgemäßen Messgerätes.

## Patentansprüche

1. Handgehaltenes Infrarotmessgerät zur berührungslosen Temperaturmessung eines Objektes, mit einem Gerätegehäuse (12) und einem im Gerätegehäuse (12) angeordneten Infrarotsensor (32) zur berührungslosen Temperaturmessung, sowie mit einem optischen Element (52) zur Bündelung der von dem Objekt ausgehenden Infrarotstrahlung auf den Infrarotsensor (32), **dadurch gekennzeichnet, dass** das optische Element (52) zwischen einem den Infrarotsensor (32) aufnehmenden Tubus (44), insbesondere einem Metalltubus, und einem den Infrarotstrahlengang umgreifenden IR-Gehäuse (48), welches im Gerätegehäuse (12) angeordnet ist, schwimmend gelagert ist, wobei das IR-Gehäuse (48) schwimmend im Gerätegehäuse (12) gelagert ist.

2. Handgehaltenes Infrarotmessgerät nach Anspruch 1, **dadurch gekennzeichnet, dass** das optische Element (52) mittels des IR-Gehäuses (48) gegen den Tubus (44) gedrückt wird.

3. Handgehaltenes Infrarotmessgerät nach Anspruch 2, **dadurch gekennzeichnet, dass** am IR-Gehäuse (48) Andruckelemente, insbesondere Andruckrippen (58), ausgebildet sind.

4. Handgehaltenes Infrarotmessgerät nach zumindest einem der vorhergehenden Ansprüche 1 bis 3, **dadurch gekennzeichnet, dass** das optische Element (52) über ein elastisches Element (54, 56) gegen den Tubus (44) gedrückt wird.

5. Handgehaltenes Infrarotmessgerät nach Anspruch 4, **dadurch gekennzeichnet, dass** das elastische Element ein Schaumstoffelement, insbesondere ein Schaumstoffring (56), ist.

6. Handgehaltenes Infrarotmessgerät nach Anspruch 5, **dadurch gekennzeichnet, dass** eine Klebeschicht auf der zum optischen Element (52) gewandten Seite des elastischen Elementes (54,56) vorgesehen ist.

7. Handgehaltenes Infrarotmessgerät nach Anspruch 4, **dadurch gekennzeichnet, dass** das elastische Element (54) an dem optischen Element (52) ausgebildet ist.

8. Handgehaltenes Infrarotmessgerät nach Anspruch 4, **dadurch gekennzeichnet, dass** das elastische Element (54) an dem IR-Gehäuse (48) ausgebildet ist.

9. Handgehaltenes Infrarotmessgerät nach zumindest einem der vorhergehenden Ansprüche, **dadurch gekennzeichnet, dass** das optische Element (52) eine IR-Linse, insbesondere eine Fresnel-Linse, ist.

10. Handgehaltenes Infrarotmessgerät nach Anspruch 1 oder 9, **dadurch gekennzeichnet, dass** eine Fresnel-Struktur einseitig auf dem optischen Element (52) ausgebildet ist.

11. Handgehaltenes Infrarotmessgerät nach Anspruch 10, **dadurch gekennzeichnet, dass** die Fresnel-Struktur des optischen Elementes (52) zum Infrarotsensor (32) hin ausgerichtet ist.

12. Handgehaltenes Infrarotmessgerät nach einem der Ansprüche 9, 10 oder 11, **dadurch gekennzeichnet, dass** das optische Element (52) über einen Rand (60), insbesondere einen Rand ohne Rillen und/oder brechende Strukturen, verfügt.

13. Handgehaltenes Infrarotmessgerät nach Anspruch 12, **dadurch gekennzeichnet, dass** das optische Element (52) mit dem Rand (60) auf dem Tubus (44) aufliegt.

14. Handgehaltenes Infrarotmessgerät nach zumindest einem der vorhergehenden Ansprüche 1 bis 13, **dadurch gekennzeichnet, dass** ein Entlüftungskanal (62) für den inneren Bauraum (70) des Tubus (44) vorgesehen ist.

## Claims

1. Handheld infrared measuring device for non-contact temperature measurement of an object, comprising a device housing (12) and an infrared sensor (32), arranged in the device housing (12) for non-contact temperature measurement, and also comprising an optical element (52) for focusing the infrared radiation emanating from the object onto the infrared sensor (32), **characterized in that** the optical element (52) is mounted in a floating fashion between a tube (44) accommodating the infrared sensor (32), in particular a metal tube, and an IR housing (48) extending around the infrared beam path, said IR housing being arranged in the device housing (12), wherein the IR housing (48) is mounted in a floating fashion in the device housing (12).

2. Handheld infrared measuring device according to Claim 1, **characterized in that** the optical element (52) is pressed against the tube (44) by means of the IR housing (48).

3. Handheld infrared measuring device according to Claim 2, **characterized in that** press-on elements, in particular press-on ribs (58) are formed on the IR housing (48).

4. Handheld infrared measuring device according to at least one of the preceding Claims 1 to 3, **characterized in that** the optical element (52) is pressed against the tube (44) by means of an elastic element (54, 56).

5. Handheld infrared measuring device according to Claim 4, **characterized in that** the elastic element is a foam element, in particular a foam ring (56).

6. Handheld infrared measuring device according to Claim 5, **characterized in that** an adhesive layer is provided on that side of the elastic element (54, 56) which faces the optical element (52).

7. Handheld infrared measuring device according to Claim 4, **characterized in that** the elastic element (54) is formed on the optical element (52).

8. Handheld infrared measuring device according to Claim 4, **characterized in that** the elastic element (54) is formed on the IR housing (48).

9. Handheld infrared measuring device according to at least one of the preceding claims, **characterized in that** the optical element (52) is an IR lens, in particular a Fresnel lens.

10. Handheld infrared measuring device according to Claim 1 or 9, **characterized in that** a Fresnel structure is formed on one side on the optical element (52).

11. Handheld infrared measuring device according to Claim 10, **characterized in that** a Fresnel structure of the optical element (52) is aligned towards the infrared sensor (32).

12. Handheld infrared measuring device according to any of Claims 9, 10 or 11, **characterized in that** the optical element (52) has an edge (60), in particular an edge without grooves and/or refractive structures.

13. Handheld infrared measuring device according to Claim 12, **characterized in that** the optical element (52) bears on the tube (44) by the edge (60).

14. Handheld infrared measuring device according to at least one of the preceding Claims 1 to 13, **characterized in that** a ventilation tube (62) for the inner structural space (70) of the tube (44) is provided.

## Revendications

1. Appareil portatif de mesure infrarouge destiné à effectuer une mesure sans contact de la température d'un objet, comportant un boîtier d'appareil (12) est un capteur infrarouge (32) disposé dans le boîtier d'appareil (12) pour mesurer sans contact la température, ainsi qu'un élément optique (52) destinée à mettre sous forme de faisceau le rayonnement infrarouge provenant de l'objet sur le capteur infrarouge (32), **caractérisé en ce que** l'élément optique (52) est monté de manière flottante entre un tube (44) recevant le capteur infrarouge (32), notamment un tube de métal, et un boîtier IR (48) enveloppant le chemin du faisceau infrarouge, qui est disposé dans le boîtier d'appareil (12), dans lequel le boîtier IR (48) est monté de manière flottante dans le boîtier d'appareil (12).

2. Appareil portatif de mesure infrarouge selon la revendication 1, **caractérisé en ce que** l'élément optique (52) est comprimé contre le tube (44) au moyen du boîtier IR (48).

3. Appareil portatif de mesure infrarouge selon la revendication 2, **caractérisé en ce que** des éléments de compression, notamment des nervures de compression (58), sont formés sur le boîtier IR (48).

4. Appareil portatif de mesure infrarouge selon au moins l'une des revendications 1 à 3 précédentes, **caractérisé en ce que** l'élément optique (52) est comprimé contre le tube (44) par l'intermédiaire d'un élément élastique (54, 56).

5. Appareil portatif de mesure infrarouge selon la revendication 4, **caractérisé en ce que** l'élément élastique est un élément en mousse, notamment un anneau en mousse (56).

6. Appareil portatif de mesure infrarouge selon la revendication 5, **caractérisé en ce qu'**il est prévu une couche adhésive sur la face de l'élément élastique (54, 56) qui est tournée vers l'élément optique (52).

7. Appareil portatif de mesure infrarouge selon la revendication 4, **caractérisé en ce que** l'élément élastique (54) est formé sur l'élément optique (52).

8. Appareil portatif de mesure infrarouge selon la revendication 4, **caractérisé en ce que** l'élément élastique (54) est formé sur le boîtier IR (48).

9. Appareil portatif de mesure infrarouge selon au moins l'une des revendications précédentes, **caractérisé en ce que** l'élément optique (52) est une lentille IR, notamment une lentille de Fresnel.

10. Appareil portatif de mesure infrarouge selon la revendication 1 ou 9, **caractérisé en ce qu'**une structure de Fresnel est formée d'un seul côté sur l'élément optique (52).

11. Appareil portatif de mesure infrarouge selon la revendication 10, **caractérisé en ce que** la structure de Fresnel de l'élément optique (52) est orientée vers le capteur infrarouge (32).

12. Appareil portatif de mesure infrarouge selon l'une quelconque des revendications 9, 10 ou 11, **caractérisé en ce que** l'élément optique (52) possède un bord (60), notamment un bord sans rainures et/ou sans structures réfractantes.

13. Appareil portatif de mesure infrarouge selon la revendication 12, **caractérisé en ce que** l'élément optique (52) repose par le bord (60) sur le tube (44).

14. Appareil portatif de mesure infrarouge selon au moins l'une des revendications 1 à 13 précédentes, **caractérisé en ce qu'**il est prévu un canal de ventilation (62) destiné à l'espace de montage interne (70) du tube (44).
